# EUROPEAN PATENT SPECIFICATION

(11) **EP 2 570 737 B1**
(45) Date of publication and mention of the grant of the patent: **23.03.2016**
(21) Application number: 12184409.6
(22) Date of filing: 14.09.2012
(51) Int. Cl.: F24D 3/00, F24D 3/08, F24D 11/00, F24D 17/00

(54) **Boiler for heating sanitary water**
Kessel zum Erhitzen von Sanitärwasser
Chaudière de chauffage d'eau sanitaire

(30) Priority: 16.09.2011 IT VR20110178
(43) Date of publication of application: 20.03.2013
(73) Proprietor: Montini, Renato, 37010 Costermano, Frazione Albare' VR (IT)
(72) Inventor: Montini, Renato, 37010 Costermano, Frazione Albare' VR (IT)
(74) Representative: Modiano, Micaela Nadia

(56) References cited:
- CH-A- 176 850
- DE-A1- 4 236 967
- DE-U1-202007 018 564
- FR-A1- 2 928 442
- GB-A- 2 256 917

## Description

The present invention relates to a boiler for heating sanitary water.

The ever increasing attention to problems relating to saving energy, as well as a number of requirements found in particular types of dwellings, have led in recent years to the development of a number of types of plants for the production of hot water, which basically consist of a water accumulation tank.

The heating of the water contained in the accumulation tank (which can in some cases be used for heating by way of radiators and/or floor heating systems) is ensured by the use of solar panels, or alternative heat sources (for example wood-fired), or by a "classic" heat exchanger which is associated with a heating tank. DE 20 2007 018 564 U1 shows an example of such a system.

In a first type of plant, a tank for the containment of the sanitary water to be heated is accommodated inside the accumulation tank. This water is essentially heated in a water-bath fashion by the hot water contained in the accumulation tank.

The main drawbacks of such a type of plant consist in the slowness of heating the water contained in the containment tank owing to the limited heat exchange surface, and the limited available capacity for sanitary water.

In another type of plant, the accumulation tank, which in this case is also heated by way of heat exchangers that are connected to solar panels and to a heating tank, is also the sanitary water containment tank.

In this specific case, it is necessary to produce the accumulation tank from stainless steel or from internally enameled steel. In this case, there is a greater availability of sanitary hot water but, in addition to the higher costs of producing the tank, there are also higher costs of running the plant since there must be periodic cycles for heating all the water contained in the tank to over 60°C in order to prevent the risk of salmonellosis.

In a last type of conventional plant, the accumulation tank, heated by way of heat exchangers that are connected to solar panels and to the heating tank, is traversed by a pipe coil inside which runs the sanitary water, originating from the water mains.

In practice, the sanitary water, by traversing the pipe coil accommodated in the accumulation tank, is heated. In this case, there is a high cost of the plant, which is determined by the cost of the pipe coil which must be conveniently corrugated (and also long) in order to provide a sufficient heat exchange surface.

The aim of the present invention is to make available a boiler for heating sanitary water which is capable of eliminating, or at least drastically reducing, the above-mentioned drawbacks in the plants available on the market today.

Within this aim, an object of the present invention is to offer a boiler for heating sanitary water which makes it possible to obtain the heating of the sanitary water quickly and with particularly high energy yields.

Another object of the present invention is to devise a boiler for heating sanitary water which has an extremely competitive cost, so that its use is advantageous from the economic viewpoint as well.

This aim and these and other objects which will become more apparent hereinafter are achieved by a boiler for heating sanitary water according to claim 1.

Further characteristics and advantages of the invention will become more apparent from the description of some preferred but not exclusive embodiments of a boiler for heating sanitary water according to the present invention, which are illustrated by way of non-limiting example in the accompanying drawings wherein:

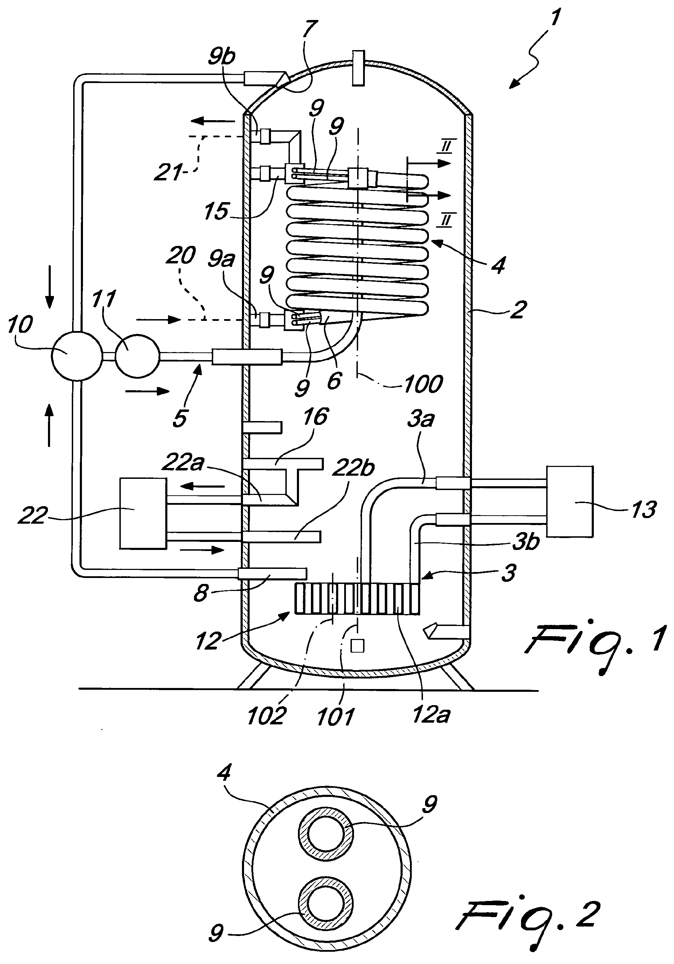

Figure 1 is a partially sectional view of a boiler according to the invention;
Figure 2 is a transverse cross-section of the exchanger tube.

In the embodiments that follow, individual characteristics shown in relation to specific examples may in reality be interchanged with other, different characteristics, existing in other embodiments.

The present invention relates to a boiler, generally designated by the reference numeral 1, for heating sanitary water.

The boiler 1 is supported, advantageously, by a supporting frame (not shown in the figures) which is constituted for example by a supporting base for a containment chamber which extends along an axis of longitudinal extension 100 which is arranged, in use, along a direction that is substantially vertical.

The containment chamber 2 is associated with a heating device 3 and is adapted to contain a primary fluid (typically water).

Advantageously, the heating device 3 comprises a first exchanger assembly 3a which is connected to a solar panel heating assembly 13.

In particular, the first heating means 3 comprise a first exchanger assembly 12 which is connected to a solar panel heating assembly 13.

The exchanger assembly 12 is advantageously constituted by a pipe coil 12a structure which comprises a tubular element connected, at its ends, to a respective supply duct 3a and a return duct 3b of the fluid intended to pass through the pipe coil structure 12a.

The tubular element is wound, in a circular coil, about a winding axis 101. In this manner the pipe coil structure 1 extends substantially over a plane of arrangement which is substantially perpendicular to the above-mentioned winding axis 101.

Conveniently, such tubular element has, in transverse cross-section, a shape structure which is flattened along an axis of longitudinal extension 102 which is substantially parallel to the winding axis 101.

The positioning of the solar element at the base of the lower portion of the containment body 1 makes it possible to transfer the heat energy to the zone in which the primary fluid is coldest, consequently increasing the efficiency of the heat exchange.

According to the present invention, an exchanger tube 4 is accommodated within the containment chamber 2 which is connected, in input, to an exchanger circuit 5.

The exchanger tube 4 leads into an outlet 6 which is accommodated within the containment chamber 2.

The exchanger circuit 5 is associated, or associable, externally to the containment chamber 2, with means 10 for heating the primary fluid and with means 11 for the forced circulation of the primary fluid.

In particular, the means 11 for the forced circulation of the primary fluid are adapted to withdraw the primary fluid, through a first withdrawal port 7, from the containment chamber 2 to send it to the exchanger tube 4.

Delving deeper into the details, the exchanger tube 4 is at least partially crossed internally by at least one pipe 9 for heating sanitary water.

In particular, the or each pipe 9 for heating the sanitary water is connected, through a feeding connector 9a, to the water mains 20 and, through a transfer duct 9b, to the network 21 for using the sanitary water.

Conveniently, at least one portion of the exchanger tube 4 is shaped like a cylindrical spiral around a winding axis 100 which, conveniently, coincides with a vertical axis.

It has been found to be particularly advantageous to have the exchanger tube 4 be at least partially crossed internally by two or more pipes 9 for heating sanitary water so as to ensure a larger heat exchange surface between the primary fluid moved inside the exchanger tube 4 and the sanitary water to be heated which passes through the heating pipes 9.

Conveniently, the sanitary water to be heated passes through the heating pipes 9 in countercurrent with respect to the primary fluid passing through the exchanger tube 4.

According to a preferred embodiment, the first withdrawal port 7 is adapted to withdraw the primary fluid above the exchanger tube 4 and, in more detail, such first withdrawal port 7 is positioned substantially at the top of the containment body 2.

Advantageously, the forced circulation means 10 comprise a pump while the heating means 11 can be constituted by a heating tank.

According to a preferred embodiment, the exchanger circuit 5 can be connected to a second withdrawal port 8 which is arranged below the exchanger tube 4.

Advantageously, the boiler 1 has, substantially at the transfer duct 9b, a first temperature sensor 15 which is functionally connected to a control device adapted to actuate, as a function of the temperature detected by the first temperature sensor, the means 11 of forced circulation and the means 10 of heating the primary fluid.

Conveniently, the boiler 1 comprises at least one circuit 22 for using the primary fluid which can be a floor heating circuit or a radiator heating system.

The circuit for use 22 is connected to the containment chamber 2 respectively through a delivery port 22a and to a return port 22b.

Advantageously, at the delivery port 22a there is a second temperature sensor 16 which is functionally connected to a control device adapted to actuate, as a function of the detected temperature, the means 11 of forced circulation and the means 10 of heating the primary fluid.

The use of a boiler 1 according to the present invention follows in an evident manner from the foregoing description.

In particular, when the primary fluid inside the containment body 2 is already hot, for example following the action of the first heating means 3 which are connected to the solar panels, and there is a demand for sanitary hot water, the pump begins to withdraw the heating fluid from the first withdrawal port 7 to make it pass through the exchanger tube 4 so as to transfer the heat to the sanitary water to be heated which passes through the or each heating pipe 9.

If the first temperature sensor 15 detects that the temperature of the sanitary water sent to the network of use 21 is lower than the temperature required, the control device associated therewith will increase the flow rate of the pump so as to ensure a greater exchange of heat toward the sanitary water to be heated.

Such control device is moreover programmed to command the switching-on of the heating tank (and thus the heating of the primary fluid which passes through the exchanger circuit 5) if the pump exceeds a preset flow rate which, indicatively, can correspond to 70-80% of the power of the pump.

By using for example a pump and a modulating heating tank, it will not be necessary to provide a valve for mixing since the control device, based on the data collected by the first temperature sensor 15, will control the flow rate of the pump and optionally the switching-on/switching-off of the heating tank so as to ensure the temperature set by the user in output from the transfer duct 9a.

On the other hand, when there is no demand for sanitary hot water but the circuit of use 22 (for example, floor heating) is active, the pump will withdraw the heating fluid from the second withdrawal port 8 so as to send it to the exchanger tube 4.

In this case too, if the second temperature sensor 16 detected a temperature of the heating water lower than the preset temperature, the control device associated with it will gradually increase the flow rate of the pump so as to ensure an increase in the temperature of the primary fluid.

Such control device is moreover programmed to command the switching-on of the heating tank (and thus the heating of the primary fluid which passes through the exchanger circuit 5) if the pump exceeds a preset flow rate which, indicatively, can correspond to 70-80% of the power.

All the characteristics of the invention indicated as advantageous, convenient or similar may also be missing or be substituted by equivalent characteristics.

The invention, thus conceived, is susceptible of numerous modifications and variations, all of which are within the scope of the appended claims.

In practice it has been found that in all the embodiments the invention has achieved the set aim and objects.

In particular, the boiler according to the invention makes it possible to obtain instant sanitary hot water as well as supplying low temperature water for a usage plant (such as a floor heating system) without the necessity of providing the anode and of taking precautions against the development of legionellosis.

The boiler is moreover capable of effectively using the heat energy yielded by the solar panel assembly thus reducing, at the same time, the intervention of the heating tank.

The dimensions, the materials and the contingent shapes may be any according to requirements.

The particular structure of the boiler 1 makes it possible to produce the containment body and the exchanger tube in non-enameled iron, while the heating pipes can be made of a material that is adapted to be traversed by sanitary water (such as steel or copper).

Moreover, all the details may be substituted by other, technically equivalent elements.

The disclosures in Italian Patent Application No. VR2011A000178 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A boiler (1) for heating sanitary water, **characterized in that** it comprises a containment chamber (2) which is associated with a heating device (3) and is adapted to contain a primary fluid, an exchanger tube (4) being accommodated within said containment chamber (2) and being connected in input to an exchanger circuit (5) and leading into an outlet (6) which is accommodated within said containment chamber (2), said exchanger circuit (5) being associated, externally with respect to said containment chamber (2), with means (10) for heating said primary fluid and with means (11) for the forced circulation of said primary fluid which are adapted to withdraw said primary fluid, through a first withdrawal port (7), from said containment chamber (2) so as to send it to said exchanger tube (4), said exchanger tube (4) being at least partially crossed internally by at least one duct (9) for heating sanitary water, which is connected, through a feeding connector (9a), to the water mains (20) and, through a transfer duct (9b), to the system (21) for using the sanitary water.

2. The boiler (1) according to claim 1, **characterized in that** at least one portion of said exchanger tube (4) is shaped like a cylindrical spiral around a winding axis (100).

3. The boiler (1) according to one or more of the preceding claims, **characterized in that** said exchanger tube (4) is crossed internally, at least partially, by at least two ducts (9) for heating sanitary water.

4. The boiler (1) according to one or more of the preceding claims, **characterized in that** said first withdrawal port (7) is adapted to withdraw said primary fluid above said exchanger tube (4).

5. The boiler (1) according to one or more of the preceding claims, **characterized in that** said forced circulation means (10) comprise a pump.

6. The boiler (1) according to one or more of the preceding claims, **characterized in that** said exchanger circuit (5) can be connected to a second withdrawal port (8) which is arranged below said exchanger tube (4).

7. The boiler (1) for heating sanitary water according to one or more of the preceding claims, **characterized in that** said heating means (10) comprise a heating tank.

8. The boiler (1) for heating sanitary water according to one or more of the preceding claims, **characterized in that** said heating device (3) comprises a first exchanger assembly (12), which is connected to a solar panel heating assembly (13).

9. The boiler (1) for heating sanitary water according to one or more of the preceding claims, **characterized in that** it comprises, substantially at said transfer duct (9b), a first temperature sensor (15), which is functionally connected to a control device adapted to actuate, as a function of the detected temperature, said forced circulation means (11) and said means (10) for heating said primary fluid.

10. The boiler (1) for heating sanitary water according to one or more of the preceding claims, **characterized in that** it comprises a circuit (22) for using said primary fluid which is connected to said containment chamber (2) through a delivery port (22a) and to a return port (22b), a second temperature sensor (16) being provided, substantially at said delivery port (22a), and being functionally connected to a control device which is adapted to actuate, as a function of the detected temperature, said forced circulation means (11) and said means (10) for heating said primary fluid.

## Patentansprüche

1. Ein Boiler (1) zum Erhitzen von Sanitärwasser, **dadurch gekennzeichnet, dass** er eine Behälterkammer (2) umfasst, die mit einer Heizvorrichtung (3) verbunden und ausgebildet ist, um ein Hauptfluid aufzunehmen, wobei ein Austauscherrohr (4) in der Behälterkammer (2) untergebracht und im Eingang mit einem Austauscherkreislauf (5) verbunden ist und in einen Auslass (6) mündet, der in der Behälterkammer (2) untergebracht ist, wobei der Austauscherkreislauf (5) außerhalb der Behälterkammer (2) mit Mitteln (10) zum Erhitzen des Hauptfluids und mit Mitteln (11) für das Erzwingen der Zirkulation des Hauptfluids verbunden ist, die ausgebildet sind, um das Hauptfluid durch einen ersten Entnahmeanschluss (7) aus der Behälterkammer (2) zu ziehen, um es zu dem Austauscherrohr (4) zu transportieren, wobei das Austauscherrohr (4) innen zumindest teilweise von mindestens einer Leitung (9) zum Erhitzen von Sanitärwasser gekreuzt wird, die über einen Zuführanschluss (9a) mit der Hauptwasserleitung (20) und über eine Übertragungsleitung (9b) mit dem System (21) zur Nutzung des Sanitärwassers verbunden ist.

2. Der Boiler (1) gemäß Anspruch 1, **dadurch gekennzeichnet, dass** mindestens ein Abschnitt des Austauscherrohrs (4) wie eine zylindrische Spirale um eine Wicklungsachse (100) geformt ist.

3. Der Boiler (1) gemäß einem oder mehreren der obigen Ansprüche, **dadurch gekennzeichnet, dass** das Austauscherrohr (4) innen zumindest teilweise von mindestens zwei Leitungen (9) zur Erhitzung von Sanitärwasser gekreuzt wird.

4. Der Boiler (1) gemäß einem oder mehreren der obigen Ansprüche, **dadurch gekennzeichnet, dass** der erste Entnahmeanschluss (7) ausgebildet ist, um das Hauptfluid oberhalb des Austauscherrohrs (4) zu entnehmen.

5. Der Boiler (1) gemäß einem oder mehreren der obigen Ansprüche, **dadurch gekennzeichnet, dass** die Mittel (10) zum Erzwingen der Zirkulation eine Pumpe umfassen.

6. Der Boiler (1) gemäß einem oder mehreren der obigen Ansprüche, **dadurch gekennzeichnet, dass** der Austauscherkreislauf (5) mit einem zweiten Entnahmeanschluss (8) verbunden werden kann, der unterhalb des Austauscherrohrs (4) angeordnet ist.

7. Der Boiler (1) zum Erhitzen von Sanitärwasser gemäß einem oder mehreren der obigen Ansprüche, **dadurch gekennzeichnet, dass** die Heizmittel (10) einen Heiztank umfassen.

8. Der Boiler (1) zum Erhitzen von Sanitärwasser gemäß einem oder mehreren der obigen Ansprüche, **dadurch gekennzeichnet, dass** die Heizvorrichtung (3) einen ersten Austauscheraufbau (12) umfasst, der mit einem Solarmodul-Heizaufbau (13) verbunden ist.

9. Der Boiler (1) zum Erhitzen von Sanitärwasser gemäß einem oder mehreren der obigen Ansprüche, **dadurch gekennzeichnet, dass** er, im Wesentlichen an der Übertragungsleitung (9b), einen ersten Temperatursensor (15) umfasst, der funktional mit einem Steuergerät verbunden ist, welches ausgebildet ist, um, in Abhängigkeit von der erfassten Temperatur, die Mittel (11) zum Erzwingen der Zirkulation und die Mittel (10) zum Erhitzen des Hauptfluids anzusteuern.

10. Der Boiler (1) zum Erhitzen von Sanitärwasser gemäß einem oder mehreren der obigen Ansprüche, **dadurch gekennzeichnet, dass** er einen Kreislauf (22) zur Nutzung des Hauptfluids umfasst, der mit der Behälterkammer (2) über einen Zufuhranschluss (22a) und mit einem Rücklaufanschluss (22b) verbunden ist, wobei ein zweiter Temperatursensor (16) im Wesentlichen an dem Zufuhranschluss (22a) bereitgestellt und funktional mit einem Steuergerät verbunden ist, das ausgebildet ist, um in Abhängigkeit von der erfassten Temperatur die Mittel (11) zum Erzwingen der Zirkulation und die Mittel (10) zum Erhitzen des Hauptfluids anzusteuern.

## Revendications

1. Chaudière (1) pour chauffer de l'eau à usage sanitaire, **caractérisée en ce qu'**elle comporte une enceinte de confinement (2) qui est associée à un dispositif de chauffage (3) et est destinée à renfermer un fluide primaire, un tube (4) d'échangeur logé dans ladite enceinte de confinement (2) et relié, au niveau d'une entrée, à un circuit (5) d'échangeur et aboutissant à une sortie (6) qui est logée dans ladite enceinte de confinement (2), ledit circuit (5) d'échangeur étant associé, extérieurement par rapport à ladite enceinte de confinement (2), à un moyen (10) pour chauffer ledit fluide primaire et à un moyen (11) pour la circulation forcée dudit fluide primaire, lesquels sont conçus pour faire sortir ledit fluide primaire de ladite enceinte de confinement (2) par un premier orifice d'extraction (7) afin de l'envoyer audit tube (4) d'échangeur, ledit tube (4) d'échangeur étant au moins partiellement traversé intérieurement par au moins un conduit (9) pour le chauffage d'eau à usage sanitaire, lequel est raccordé, par l'intermédiaire d'un raccord d'alimentation (9a), au réseau (20) d'eau et, par l'intermédiaire d'un conduit de transfert (9b), au système (21) destiné à utiliser l'eau à usage sanitaire.

2. Chaudière (1) selon la revendication 1, **caractérisée en ce qu'**au moins une partie dudit tube (4) d'échangeur a une configuration en spirale cylindrique autour d'un axe d'enroulement (100).

3. Chaudière (1) selon une ou plusieurs des revendications précédentes, **caractérisée en ce que** ledit tube (4) d'échangeur est intérieurement traversé au moins partiellement par au moins deux conduits (9) pour le chauffage d'eau à usage sanitaire.

4. Chaudière (1) selon une ou plusieurs des revendications précédentes, caractérisée en ce ledit premier orifice d'extraction (7) est conçu pour faire sortir ledit fluide primaire au-dessus dudit tube (4) d'échangeur.

5. Chaudière (1) selon une ou plusieurs des revendications précédentes, **caractérisée en ce que** ledit moyen de circulation forcée (10) comprend une pompe.

6. Chaudière (1) selon une ou plusieurs des revendications précédentes, caractérisée en ce ledit circuit (5) d'échangeur peut être relié à un second orifice d'extraction (8) ménagé sous ledit tube (4) d'échangeur.

7. Chaudière (1) selon une ou plusieurs des revendications précédentes, caractérisée en ce ledit moyen de chauffage (10) comprend un réservoir de chauffage.

8. Chaudière (1) selon une ou plusieurs des revendications précédentes, **caractérisée en ce que** ledit dispositif de chauffage (3) comprend un premier système d'échangeur de chaleur (12), lequel est relié à un système de chauffage à panneau solaire (13).

9. Chaudière (1) selon une ou plusieurs des revendications précédentes, **caractérisée en ce qu'**elle comporte, sensiblement sur ledit conduit de transfert (9b), un premier capteur de température (15), qui est fonctionnellement connecté à un dispositif de commande destiné à faire fonctionner, en fonction de la température détectée, ledit moyen de circulation forcée (11) et ledit moyen (10) pour chauffer ledit fluide primaire.

10. Chaudière (1) selon une ou plusieurs des revendications précédentes, **caractérisée en ce qu'**elle comporte un circuit (22) pour l'utilisation dudit fluide primaire qui est relié à ladite enceinte de confinement (2) via un orifice de refoulement (22a) et à un orifice de retour (22b), un second capteur de température (16) étant présent, sensiblement sur ledit orifice de refoulement (22a), et étant connecté fonctionnellement à un dispositif de commande conçu pour faire fonctionner, en fonction de la température détectée, ledit moyen de circulation forcée (11) et ledit moyen (10) pour chauffer ledit fluide primaire.
